# EUROPEAN PATENT SPECIFICATION

(11) **EP 2 752 017 B1**
(45) Date of publication and mention of the grant of the patent: **18.05.2016**
(21) Application number: 12748714.8
(22) Date of filing: 24.08.2012
(51) Int. Cl.: H04N 21/2343, H04N 21/845, H04N 21/6379, H04L 29/06, H04N 21/658, H04N 21/442, H04N 21/65, H04N 21/231

(54) **METHOD AND APPARATUS FOR ADAPTIVE TRANSCODING OF MULTIMEDIA STREAM**
VERFAHREN UND VORRICHTUNG ZUR ADAPTIVEN UMCODIERUNG EINES MULTIMEDIA-STREAMS
PROCÉDÉ ET APPAREIL POUR LE TRANSCODAGE ADAPTATIF D'UN FLUX MULTIMÉDIA

(30) Priority: 02.09.2011 EP 11306093
(43) Date of publication of application: 09.07.2014
(73) Proprietor: Thomson Licensing, 92130 Issy Les Moulineaux (FR)
(72) Inventor: DELAUNAY, Christophe, F-92443 Issy les Moulineaux Cedex (FR); HOUDAILLE, Rémi, F-92443 Issy les Moulineaux Cedex (FR); GOUACHE, Stéphane, F-92443 Issy les Moulineaux Cedex (FR); BEL HADJ ALI, Habib, Tunis 2078 (TN)
(74) Representative: Amor, Rim
(86) International application number: PCT/EP2012/066471
(87) International publication number: WO 2013/030096

(56) References cited:
- US-A1- 2011 088 076
- LASZLO BÖSZÖRMENYI ET AL: "Metadata-driven optimal transcoding in a multimedia proxy", MULTIMEDIA SYSTEMS, SPRINGER, BERLIN, DE, vol. 13, no. 1, 8 March 2007 (2007-03-08), pages 51-68, XP019543631, ISSN: 1432-1882, DOI: 10.1007/S00530-007-0077-X
- CHI-FENG KAO ET AL: "Aggregate Profit-Based Caching Replacement Algorithms for Streaming Media Transcoding Proxy Systems", IEEE TRANSACTIONS ON MULTIMEDIA, IEEE SERVICE CENTER, PISCATAWAY, NJ, US, vol. 9, no. 2, 1 February 2007 (2007-02-01), pages 221-230, XP011157475, ISSN: 1520-9210, DOI: 10.1109/TMM.2006.886259
- Open Iptv Forum: "OIPF Release 2 Specification Volume 2a - HTTP Adaptive Streaming [V2.1] - [2011-06-21]", , 21 June 2011 (2011-06-21), XP055016201, Retrieved from the Internet: URL:http://www.oipf.tv/docs/Release2/V2.1/ OIPF-T1-R2-Specification-Volume-2a-HTTP-Ad aptive-Streaming-V2_1-2011-06-21.pdf [retrieved on 2012-01-11]

## Description

The present invention pertains to a method and an apparatus for adaptive transcoding of a multimedia stream, in particular of an audio and/or video stream.

Audio and/or video streams may be consumed by a user using a variety of different devices. Notably video streams may require a format or representation that is adapted to the screen size of the reproducing device. Audio streams may likewise be subject to limits set by the reproducing device. However, in the following the invention will be presented with a focus on video streams.

Adaptation of streaming content of any kind may also be required due to variations in the connection over which the content is streamed. For example, a wireless connection may provide only a varying throughput due to congestion, or varying reception conditions caused by roaming of the receiving device.

A variety of implementations for adaptive streaming of content have been proposed. For example the implementation of Apple Inc., CA, also known as "HTTP Live Streaming", or "HLS". This implementation is described by R. Pantos: "HTTP Live Streaming," IETF, Internet-Draft Version 5 (draft-pantos-http-live-streaming-05), November 2010.

Another implementation is presented by Microsoft ™ and is known as "Silverlight Smooth streaming". This implementation is described in "IIS smooth streaming technical overview." Details are available online under http://www.microsoft.com/downloads/details.aspx?displaylang=en&FamilyID= 03d22583-3ed6-44da-8464-b1b4b5ca7520.

Yet another implementation is presented by Adobe Systems Inc. and is known by the name "Adobe Dynamic Streaming". Details can be found in the document "HTTP dynamic streaming on the Adobe Flash platform", available online under http://www.adobe.com/products/httpdynamicstreaming/pdfs/httpdynamicstrea ming wp ue.pdf.

Standardization work is still being carried out by 3GPP within the SA4 group and in MPEG by the "Dynamic Adaptive Streaming over HTTP" (DASH) group. Details on this work are published by T. Stockhammer: "Dynamic adaptive streaming over HTTP -standards and design principles", in Proc. of the 2011 ACM Conference on Multimedia Systems (MMSysE 2011), February 2011, pp. 157-168.

In all of the known implementations a server must have stored the content to be streamed pre-encoded and ready to be delivered - either as individual chunks or as segments that can be extracted from a larger container file.

Kevin J. Ma, Radim Bartos, Swapnil Bhatia, Raj Nair: "Mobile video delivery with HTTP", IEEE Communications Magazine, April 2011, pp.166-174, disclose adaptive streaming of content using transcoding. Transcoding is used in the sense of converting a multimedia content from one format to another.

Kuei-Chung Chang, Ren-Yo Wu, Tien-Fu Chen: "Efficient segment-based video transcoding proxy for mobile multimedia services", IEEE International Conference on Multimedia and Expo, (ICME) 2005, pp.755-758, also discuss transcoding of streamed video.

US 2011/0088076 describes a system and method for media adaptation.

The article of Laszlo Böszörmenyi et al. "Metadata-driven optimal transcoding in a multimedia proxy", Multimedia systems, vol.13, n°1, 8 March 2007, pages 51-68, describes an adaptive multimedia proxy which provides caching, filtering, and media gateway functionalities.

It is an object of the invention to improve the user experience for transcoded streamed content while at the same time reducing the server and/or system requirements.

The object is achieved by the method and the apparatus presented in the attached claims. Respective dependent claims represent embodiments and developments of the apparatus and the method.

In order to provide the best possible user experience for each item of streamed content, a user may select a content format appropriate for the playback device he/she intends to use. The selection may also be based upon other considerations, including but not limited to bandwidth required for the transmission, notably with regard to concurring transmissions via the same transmission channel, and the cost associated with the transmission bandwidth. Likewise, pay-content may have a pricing that is depending on the quality of the representation.

As discussed above, a content stream is usually stored on a server, e.g. on a HTTP server, in a variety of formats and qualities. The highest quality most likely has a high bit rate; the lowest quality most likely has a low bit rate. This allows distribution of the content to many different terminals, or client devices, which can additionally be subject to highly varying network conditions. The whole content stream is divided into chunks which are selected such that a client device, e.g. the video player or terminal, may smoothly switch from one quality level to another between two chunks. Such switching may occur in case of varying conditions of the network connection, but also in case a user desires to change the playback devices while continuing consuming the content. As a result, the video quality may vary while playing but rarely freezes.

Once content in a quality not available on the server is requested by a user, the content stream, or chunks thereof, is transcoded into the requested format and quality and is transmitted to the user. Transcoding of content, however, requires time, which will delay the playback of the content requested by the user. Even if the first few chunks of video can be transmitted once they are transcoded, and transcoding of the following chunks of video can be continued in the background, such delay is generally undesirable, as it reduces the perceived quality of user experience for the service.

The delay is particularly noticeable in case of variations of the network connection between a server and the playback device, or between a transcoding gateway and the playback device, forcing the server or the gateway to reduce the data rate of the content on the connection to the playback device. The delay is likewise noticeable when a user changes the playback device while continuing consuming the content, in particular for seamless playback experience, which may be a paid premium service of the content provider. For example, a user may start watching a video on a large screen in his/her home and decide to move to a different place while the video has not ended. The remaining part of the video could then be reproduced on a mobile device having different screen size and playback capability. This requires not only that the stream must be redirected to the new playback device, but also that the transcoding parameters must be changed. This changeover inserts another delay into the stream if a copy of the video, or chunks thereof, in the new format is not readily available for immediate switchover.

Typically, the content stream is announced to the client device, or reproduction device, as a stream descriptor which provides, among other things, a set of so-called "representations", one representation per quality level, bit-rate, format, etc. Each full representation comprises a series of chunks, preferably of equal duration, and has a set of descriptive elements attached for selection by the client. Each chunk is accessible by a separate URL.

In order for supporting live streaming the announcement may describe only a piece of the corresponding content stream. In this case, the announced piece must be periodically renewed.

The delay may be avoided by keeping copies of the content on the server in all conceivable formats, as discussed further above. This approach, however, requires an extremely large storage, which is inefficient notably for formats that are requested less often, and which is therefore undesirable.

If only one copy of the content in the highest quality is available, another way of avoiding the delay is using a transcoder that is capable of transcoding, in parallel, the requested content into all of the conceivable formats, see discussion above. Such transcoder, however, requires extremely high processing power, which most likely comes at a very high cost, and which is therefore undesirable, too.

In accordance with an embodiment of the invention, a client device sends a request for a desired content to a server. The request includes an indication of a format, quality, bandwidth, data rate, and the like, the client device is capable of handling for reproduction, and may also include an indication of a preferred format. The request may be made in the form of selecting one of a plurality of HTTP links, each link representing one format, data rate, or quality, or a combination thereof. Each link conveys, to a transcoder, information allowing for setting appropriate transcoder parameters for producing a content stream having the desired and selected properties. In other words, a selection page offered by the server provides the client device with a description how the streamed content can be received, e.g. as a list of available options to chose from.

The streaming content is provided to the client in a sequence of chunks. Each chunk is retrieved by an individual request, e.g. a HTTP request, just as if it were a small file. For each chunk the client device decides, which bit-rate, quality, resolution, format, etc., is appropriate, notably with regard to the network connection's properties, and accordingly requests the chunk by a specific link address, or URL. Accordingly, a unique URL exists for each chunk of the streaming content for each of the various bit-rates, formats, qualities, etc. The individually requested chunks are played back, one after the other, so as to form the content stream.

As was discussed further above, notably for live streaming content, but also for other types of content on demand, live servers need to prepare chunks in all conceivable qualities, formats, data rates, etc. in real time. Typically, the resulting variety of chunks would be at least temporarily stored and delivered upon request, e.g. through a web server. Limited transcoding and/or storage resources at the server present an obstacle for such an approach. Changing the transcoding parameters only in response to the request for the next chunk will result in delays, preventing smooth and gapless playback of the content stream.

In accordance with the invention, if a chunk having properties as requested is not available, although being announced to the client device as available, a request to the link pointing to such not-available chunk is answered using an available chunk, preferably using an available chunk having properties as close as possible to the requested one. Such chunk could e.g. be selected from a limited selection of previously computed and stored versions of the same content. While the pre-computed chunk is delivered to provide a smooth content stream the parameters of the original request are used for accordingly changing the transcoder parameters. The next chunk to be transmitted would then be available in the actually requested format, quality, bit-rate, etc. This approach relies to some extent on the connection properties changing slower than the duration of the reproduction of a chunk.

The inventive adaptive streaming allows for producing, on-the-fly, an HTTP adaptive streaming compliant content stream from, including but not limited to, any incoming broadcast or legacy IPTV programs. One possible output is H.264 video and AAC audio multiplexed in a format suitable for delivery to an adaptive client, e.g. MPEG-TS for delivery to client devices made by Apple Inc., CA.

H.264 encoding requires a large number of computations, and a resource-limited transcoding device, e.g. a device using an Intel CE4200 processor that is designed for embedded devices and has limited resources for transcoding. Although this processor can produce several videos in standard definition, e.g. NTSC or PAL format, at once, it can output one HD video only at a time.

Thus, the number of different video qualities which can be output simultaneously is limited by the computational power of the Intel CE4200. For instance if the target resolution is close to HD, e.g. 1920x1080 i/p, or 720x1280 i/p, then only a single stream can be output, thus making the production of a multi-quality adaptive stream impossible.

The present invention allows for transforming an input video stream into an adaptive HTTP stream without requiring high processing power otherwise needed for producing all the possible alternative streams.

In accordance with the invention several possible representations, e.g. bit-rates, formats, etc., are offered to the client device, but in fact only a subset of the alternatives, or even only a single alternative if processing power is really low, is transcoded at a bit rate being adjusted according to the requests made by the client device.

One aspect addressed by the invention is that in adaptive content streaming the chunks of the content stream must be readily available when they are announced. Therefore, contrary to what is usually done in on-the-fly transcoding approaches, the client requests must be anticipated. Otherwise the responses to the requests would come too late. Anticipation is possible for two reasons. First, the requested chunks are part of a whole stream. In other words, they must be played in the order they were produced for the user to watch the correct content stream. Therefore, when one chunk is transcoded it is already known which one to produce next. Then, producing a few chunks at a bit-rate which is not the one requested by the client device and delivering these chunks instead of the requested ones is possible thanks to the buffering capabilities inherent to any HTTP adaptive streaming client device implementation. Of course, care is to be taken on the anticipation algorithm: overflow the client buffer must be avoided.

A method in accordance with the invention includes producing a one or more consecutive chunks of the beginning of the streaming content in advance. The Apple implementation, for example, requires at least 3 chunks for filling the player's buffer at the beginning of the streaming session. Other implementations may require a different number of chunks to be pre-transcoded. At the time when these so-called startup chunks are produced, the bit rate desired by the client is still unknown. Therefore, a bit rate is selected beforehand by the adaptation platform. The selection may be based upon a statistical analysis of previous streaming sessions, or simply arbitrary. Then, in a next step, a manifest listing alternative representations, or variants, is made available to the client, e.g. by a HTTP server. For the Apple implementation, this manifest is in the form of a M3U8 playlist. The variants may provide, inter alia, different spatial or temporal resolutions, different formats, different bit rates, or different qualities of the streaming content. For example, when the client device requests a video stream in the form of an M3U8 playlist, the HTTP server delivers a master M3U8 playlist listing the variant playlists that are available, thus defining the available bit rates. The list of available bit rates is adjusted depending on the terminal's user agent, e.g. content player. The manifest entry of each alternative variant contains a list of chunks that are ready for download by the client. This variant description is downloaded by the client. In accordance with the invention all selectable variants of the manifest point to the same pre-transcoded chunks. As mentioned above for the Apple implementation this variant manifest is expressed as a M3U8 playlist, each variant being selectable by a unique link. The client then requests streaming of a variant of the content and consequently the serving the chunks from the variant. The variant playlist lists the links pointing to available chunks, or more precisely contains symbolic links towards the available chunks. In response to the request from the client, the content server delivers the corresponding chunk, only from a pre-transcoded variant already available, and determines the desired bit rate from the request link. This desired bit rate is fed back to the transcoder which adjusts the encoding bit rate for the subsequent chunks. It is to be noted that bit rate can be replaced by format, spatial and temporal resolution, quality, etc. The transcoder continuously captures a portion of the incoming content stream, transcodes it into the desired bit rate and encapsulates it in a format suitable for adaptive streaming. Each time a new chunk is produced by the transcoder and is ready for serving, the manifest and variant definitions provided to the client are updated such that the client is informed about the newly available chunk. From the client's view the stream looks as if the transcoder is actually offering a legacy adaptive stream made of several alternative variants and the stream is adaptively adjusted to the available bandwidth or client's capabilities.

For example, assume that M is the number of variant playlists, Pₖ the k^{th} variant playlist, Bₖ the bit rate of the k^{th} variant playlist, N the number of currently available chunks, Cᵢ the chunk corresponding to i^{th} iteration. So basically when chunks C₁, C₂, C₃ are available, the playlist Pₖ lists URLs of chunks C_{k,1}, C_{k,2}, C_{k,3} being symbolic links towards C₁, C₂, C₃ respectively. The symbolic links are constructed in such a manner that it is easy to retrieve the bit rate from the URL. When the client requests the video chunk C_{k,1}, the web server not only delivers the requested chunk but also parses the request URL. From this URL the server extracts the fact the client indicated its desire to receive the 1^{st} chunk at the bit rate Bₖ signaled by the k^{th} variant playlist. This information is input to a bandwidth estimation module that computes the bit rate value that is adequate for encoding the subsequent chunk. In accordance with the invention a simple low-pass filter may be used for smoothing transient bandwidth variations. The output value B'ₖ of the bandwidth estimation module is used immediately to reconfigure the transcoder such that it produces the next chunk - chunk number 4 in this example - at bit rate B'ₖ. In addition, the transcoder is informed that the chunk #1 has just been consumed, thus indicating the "GO" for the production of chunk #4. The transcoder operates in start and stop fashion such that it avoids encoding the chunks too far in advance of their consumption. Since the Apple streaming implementation mandates the presence of N=3 chunks, the transcoder runs until the 3 chunks are ready and stops until the oldest chunk has been consumed. This mechanism helps speeding up the convergence towards the client's requested bit rate. As soon as the chunk is available, the corresponding symbolic links C_{4,k} are created for k ranging from 1 to M and all the playlists Pₖ are updated to advertise the presence of the chunk C_{4,k} to the client. Since the client periodically requests the contents of playlist Pk, it soon discovers the presence of another chunk and requests it to refill its playout buffer.

An apparatus in accordance with the invention is capable of real-time transcoding of an incoming content stream into at least one output content stream having a different format, data rate, quality, etc. For example, such an apparatus is capable of transcoding an incoming video stream is at least one H.264-compliant output video stream. The output video stream may be encapsulated into a transport format suitable for HTTP adaptive streaming. An HTTP server delivers chunks of the transcoded video stream to a client device. The server signals a desired bit rate, format, quality, etc. to the transcoder. The information about the parameters signaled to the transcoder is obtained from the client's request, but may also be derived from monitoring conditions of the connection, e.g. in case of variations of the throughput of a wireless connection with the client device. Actually, any variation of the throughput in the connection between the server hosting the streamed content and the client may cause a change in the transcoding parameters. This behavior largely depends from the position in the connection at which the transcoder is located. In case the transcoder is provided with according information from either side, i.e. from the input side of the transcoder and from the output side of the transcoder, its location in the connection between the hosting server and the client device is almost irrelevant.

An exemplary embodiment of the apparatus in accordance with the invention uses the Intel CE4200-based platform, as introduced further above. This processor includes basic video decoding and encoding functions implemented in hardware. The encapsulation and web serving tasks are performed in software. In the following this platform will be referred to as "adaptation platform".

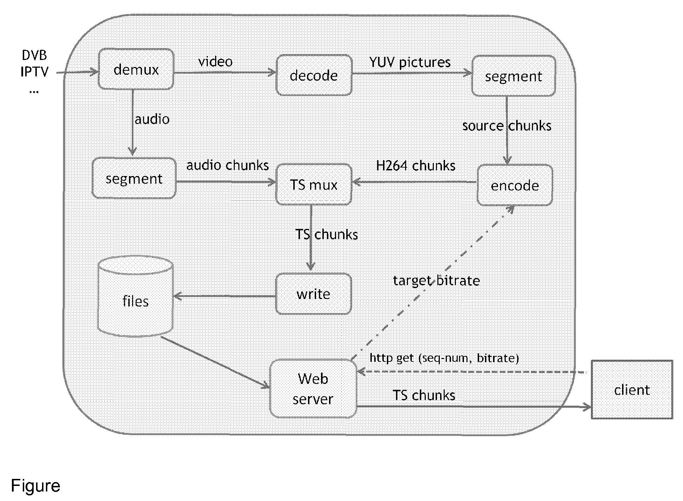

In the following the invention will be described with reference to the drawing, in which the sole figure shows an overview of the components involved.

The environment in which the invention is implemented includes three general elements: the source, the player and the adaptation platform.

The source is the origin of the streaming content, e.g. video. In other words, the source is the provider of the streaming content. It may e.g. be a home device delivering any kind of home or prepaid video, or an external content provider delivering broadcast or multicast video (DVB-T, DVB-IPTV, ...), or even a video on demand service, VoD-service, which can be represented as a file or streamed from the network. In the figure, the source is referenced DVB/IPTV.

The player is a commercial terminal, or client device, which is capable of playing a video in different qualities depending on its capabilities and networking conditions. A protocol like HTTP adaptive streaming is preferred since it allows for the client requesting the appropriate quality just before playing it. The player is shown in the figure as "client".

The adaptation platform occupies the biggest part of the figure. A demultiplexer "demux" is provided for demultiplexing the incoming content stream into separate audio and video components, if applicable. The video component is decoded in a decoder "decode" and segmented in segmenting unit "segment". Then, the segments are transcoded, i.e. re-encoded using parameters different from the original parameters, in encoder "encode". The encoder may be a H.264 encoder, but other formats are likewise possible. The audio component is split into segments in segmenting unit "segment" and may be transcoded, too (not shown). Then, the transcoded audio and video segments are provided to multiplexer "TS mux". Multiplexer "TS mux" writes the transcoded and multiplexed segments to storage "files", from where server "Web server", e.g. a HTTP server, transfers the segments to the client.

As discussed further above the invention is particularly useful when implemented in a transcoding device having limited processing power, e.g. in an internet gateway with basic media processing capabilities based on the Intel CE4200 processor.

Those skilled in the art will recognize that the choices of H.264 codec and M3U8 manifest format used in the embodiment discussed above are only necessary for the description of the invention when applied to Apple client devices. Other adaptive streaming implementations requiring other codecs such as VC1, WebM and other manifest formats can likewise benefit from the described invention when encoding resources are too scarce to produce all the necessary alternative streams in parallel.

In case of streaming live video the manifest announces sets of chunks which change over time. The announced set of variants may also vary. This can be used in a development of the invention, in which the set of proposed variants is dynamically modified. For example, if a manifest proposes five variants, three with a bit-rate close to the last requested one, e.g. slightly lower and slightly higher, one much higher and the fifth one much lower. The versions presented in the manifest may be updated depending on the past variations of the connection's throughput.

In case the transcoder is capable of producing more than one H.264 output stream, it is desirable to anticipate the adaptation to further improve the user experience. In accordance with a development of the invention, a tracker module keeps track of the previously requested bit rate or bit rates in addition to the current request. When the current requested bit rate is lower than the previous one, a prediction module assumes that the client may further decrease the bit rate in future requests. Therefore, in that case, two instances of the transcoder are run, producing the next chunk at both the requested bit rate C_{i,k} and the next lower bit rate C_{i,k-1}. The presenting module creates all the symbolic links for C_{i,j} for j in [k; M] pointing to C_{i,k} and the symbolic links for C_{i,j} for j in [0; k-1] to point to C_{j,k-1}.

In case the current request is at a higher bit rate than a previous one, the prediction module assumes that the bit rate will further increase in future requests and causes production of an additional version of the chunk at a higher bit rate in a similar fashion.

It is noted that the tracker module, the prediction module and the presentation module may be incorporated as software modules on a general purpose microprocessor, or may be dedicated circuits.

The present invention allows for re-distributing any input stream available towards a wide variety of devices including mobile devices and coping with transmission quality variations. This adaptation is very cost effective since it does not require the streams to be prepared in advance for adaptive streaming and can be implemented even by a low-end device such as a residential gateway.

As the chunks of streaming content are not prepared in advance, it is possible, in theory, to announce streaming content with an unlimited number of variants. As the adaptation can be performed as close to the user as possible, e.g. in a residential gateway, the invention offers a low-cost solution for providing a wide distribution while maintaining the best possible experience of each individual user. The video is widely spread with a high quality, e.g. multicast to the residential gateways, and adapted in the gateway only.

Unless it is intended to keep the streaming content for later use it is not necessary to store it on the adaptation platform. It is only necessary to store a part of it on the platform for temporary use and for implementation convenience.

## Claims

1. Method of streaming an output content stream adaptively transcoded from a corresponding input content stream, the method including the steps of:
- offering, to a client device, a number of alternative versions of the output content stream, for selection by the client device;
- dividing the input content stream into two or more chunks;
- transcoding and storing, prior to the offering step, at least a first chunk of the input content stream into at least one corresponding chunk of an output content stream corresponding to at least one version from the number of alternative versions offered to the client device;
- receiving a request, from the client device, for streaming a chunk of a selected version, from the number of alternative versions, of the output content stream, the selected version among the alternative versions offered to the client device not being available;
- beginning streaming using a first one of the at least one corresponding chunks of an output content stream corresponding to at least one version from the number of alternative versions offered to the client device that had been transcoded prior to the offering step;
- extracting transcoding parameters from the request, for controlling the transcoding of a subsequent chunk of the input content stream into the version selected by the client device; and
- streaming the subsequent chunk transcoded into the requested version.

2. The method of claim 1, wherein the at least first chunk of the input content stream is transcoded in advance into corresponding chunks of a multiplicity of versions from the number of alternative versions offered to the client device.

3. The method of claim 2, wherein the chunk corresponding to the at least first chunk that is streamed immediately in response to the request is selected from a version that is compatible with the client's capability for reproducing.

4. The method of claim 2, wherein the chunk corresponding to the at least first chunk that is streamed immediately in response to the request is selected from a version the transcoding parameters of which match as closely as possible the transcoding parameters extracted from the request received from the client device.

5. The method of claim 1, wherein transcoding includes producing an output content stream in which at least one of a format, spatial or temporal resolution, data rate, or quality is different from the respective input format, spatial or temporal resolution, data rate, or quality.

6. The method of claim 1, wherein the transcoding parameters for controlling the transcoding of a subsequent chunk of the input content stream are changed based upon information about a capacity of the connection between a server providing the input content stream and the client device.

7. The method of claim 1, wherein for each subsequent chunk, a number of alternative versions of the output content stream is offered for selection by the client device and wherein at least one variant of the chunk offered is transcoded in accordance with parameters extracted from a request directed to a chunk that is currently served.

8. Apparatus for streaming an output content stream adaptively transcoded from a corresponding input content stream, the apparatus comprising :
- a dividing unit for dividing the input content stream into two or more chunks;
- a transcoding unit for transcoding and storing at least a first chunk of the input content stream into at least one corresponding chunk of an output content stream corresponding to at least one version from a number of alternative versions offered to a client device;
- a receiving unit for receiving a request, from the client device, for streaming a chunk of a selected version, from the number of alternative versions, of the output content stream, the selected version among the alternative versions offered to the client device not being available;
- a streaming unit for beginning streaming using a first one of the at least one corresponding chunks of an output content stream corresponding to at least one version from the number of alternative versions offered to the client device that had been transcoded;
- an extracting unit for extracting transcoding parameters from the request, for controlling the transcoding of a subsequent chunk of the input content stream into the version selected by the client device;
the streaming unit being adapted for streaming the subsequent chunk transcoded into the requested version.

## Patentansprüche

1. Verfahren zum Streamen eines Ausgangsinhaltsdatenstroms, der aus einem entsprechenden Eingangsinhaltsdatenstrom adaptiv transcodiert worden ist, wobei das Verfahren die folgenden Schritte enthält:
- Anbieten einer Anzahl alternativer Versionen des Ausgangsinhaltsdatenstroms für eine Client-Vorrichtung zur Auswahl durch die Client-Vorrichtung;
- Teilen des Eingangsinhaltsdatenstroms in zwei oder mehr Chunks;
- Transcodieren und Speichern mindestens eines ersten Chunks des Eingangsinhaltsdatendatenstroms in mindestens einen entsprechenden Chunk eines Ausgangsdatendatenstroms, der mindestens einer Version aus der Anzahl der Client-Vorrichtung angebotener alternativer Versionen entspricht, vor dem Schritt des Anbietens;
- Empfangen einer Anforderung zum Streamen eines Chunks einer ausgewählten Version aus der Anzahl alternativer Versionen des Ausgangsinhaltsdatenstroms von der Client-Vorrichtung, wobei die ausgewählte Version unter den der Client-Vorrichtung angebotenen alternativen Versionen nicht verfügbar ist;
- Beginnen des Streamens unter Verwendung eines ersten der mindestens einen entsprechenden Chunks eines Ausgangsinhaltsdatenstroms, der der mindestens einen Version aus der Anzahl der Client-Vorrichtung angebotener alternativer Versionen, die vor dem Schritt des Anbietens transcodiert worden sind, entspricht;
- Extrahieren von Transcodierungsparametern aus der Anforderung, um das Transcodieren eines nachfolgenden Chunks des Eingangsinhaltsdatenstroms in die durch die Client-Vorrichtung ausgewählte Version zu steuern; und
- Streamen des nachfolgenden in die angeforderte Version transcodierten Chunks.

2. Verfahren nach Anspruch 1, wobei der mindestens erste Chunk des Eingangsinhaltsdatenstroms im Voraus in entsprechende Chunks einer Menge von Versionen aus einer Anzahl der Client-Vorrichtung angebotener alternativer Versionen transcodiert wird.

3. Verfahren nach Anspruch 2, wobei der Chunk, der dem mindestens einen ersten Chunk entspricht, der in Ansprechen auf die Anforderung sofort gestreamt wird, aus einer Version ausgewählt wird, die mit der Fähigkeit des Clients zur Wiedergabe kompatibel ist.

4. Verfahren nach Anspruch 2, wobei der Chunk, der dem mindestens ersten Chunk entspricht, der in Ansprechen auf die Anforderung sofort gestreamt wird, aus einer Version der Transcodierungsparameter ausgewählt wird, deren Anpassung an die aus der von der Client-Vorrichtung empfangenen Anforderung extrahierten Transcodierungsparameter so eng wie möglich ist.

5. Verfahren nach Anspruch 1, wobei das Transcodieren das Erzeugen eines Ausgangsinhaltsdatenstroms enthält, in dem ein Format und/oder eine räumliche oder zeitliche Auflösung und/oder eine Datenrate und/oder eine Qualität in dieser Reihenfolge von dem Eingangsformat, von der räumlichen oder zeitlichen Eingangsauflösung, von der Eingangsdatenrate oder von der Eingangsqualität verschieden sind.

6. Verfahren nach Anspruch 1, wobei die Transcodierungsparameter zum Steuern des Transcodierens eines nachfolgenden Chunks des Eingangsinhaltsdatenstroms auf der Grundlage von Informationen über eine Kapazität der Verbindung zwischen einem Server, der den Eingangsinhaltsdatenstrom bereitstellt, und der Client-Vorrichtung geändert werden.

7. Verfahren nach Anspruch 1, wobei für jeden nachfolgenden Chunk durch die Client-Vorrichtung eine Anzahl alternativer Versionen des Ausgangsinhaltsdatenstroms zur Auswahl angeboten werden und wobei mindestens eine Variante des angebotenen Chunks in Übereinstimmung mit Parametern, die aus einer Anforderung extrahiert werden, die an einen Chunk gerichtet ist, der gegenwärtig bedient wird, transcodiert wird.

8. Vorrichtung zum Streamen eines Ausgangsinhaltsdatenstroms, der aus einem entsprechenden Eingangsinhaltsdatenstrom adaptiv transcodiert worden ist, wobei die Vorrichtung umfasst:
- eine Teilungseinheit zum Teilen des Eingangsinhaltsdatenstroms in zwei oder mehr Chunks;
- eine Transcodierungseinheit zum Transcodieren und Speichern mindestens eines ersten Chunks des Eingangsinhaltsdatendatenstroms in mindestens einen entsprechenden Chunk eines Ausgangsdatendatenstroms, der mindestens einer Version aus einer Anzahl einer Client-Vorrichtung angebotener alternativer Versionen entspricht;
- eine Empfangseinheit zum Empfangen einer Anforderung zum Streamen eines Chunks einer ausgewählten Version aus der Anzahl alternativer Versionen des Ausgangsinhaltsdatenstroms von der Client-Vorrichtung, wobei die ausgewählte Version unter den der Client-Vorrichtung angebotenen alternativen Versionen nicht verfügbar ist;
- eine Streamingeinheit zum Beginnen des Streamens unter Verwendung eines ersten der mindestens einen entsprechenden Chunks eines Ausgangsinhaltsdatenstroms, der der mindestens einen Version aus der Anzahl der Client-Vorrichtung angebotener alternativer Versionen, die transcodiert worden sind, entspricht;
- eine Extraktionseinheit zum Extrahieren von Transcodierungsparametern aus der Anforderung, um das Transcodierens eines nachfolgenden Chunks des Eingangsinhaltsdatenstroms in die durch die Client-Vorrichtung ausgewählte Version zu steuern;
wobei die Streamingeinheit zum Streamen des nachfolgenden in die angeforderte Version transcodierten Chunks ausgelegt ist.

## Revendications

1. Procédé de diffusion en continu d'un flux de contenu de sortie transcodé adaptativement à partir d'un flux de contenu d'entrée correspondant, le procédé comprenant les étapes suivantes :
- l'offre à un dispositif client de plusieurs versions alternatives du flux de contenu de sortie, pour sélection par le dispositif client ;
- la division du flux de contenu d'entrée en deux ou plusieurs blocs ;
- les transcodage et stockage, avant l'étape d'offre, d'au moins un premier bloc du flux de contenu d'entrée sous forme d'au moins un bloc correspondant d'un flux de contenu de sortie correspondant à au moins une version des différentes versions alternatives offertes au dispositif client ;
- la réception d'une demande, en provenance du dispositif client, pour la diffusion en continu d'un bloc d'une version sélectionnée, à partir des différentes versions alternatives, du flux de contenu de sortie, la version sélectionnée parmi les versions alternatives offertes au dispositif client n'étant pas disponible ;
- le commencement de la diffusion en continu en utilisant un premier bloc parmi les blocs correspondants d'un flux de contenu de sortie correspondant à au moins une version parmi les différentes versions alternatives offertes au dispositif client qui avaient été transcodés avant l'étape d'offre ;
- l'extraction de paramètres de transcodage à partir de la demande, pour contrôler le transcodage d'un bloc de flux de contenu d'entrée subséquent vers la version sélectionnée par le dispositif client ; et
- la diffusion en continu du bloc subséquent transcodé vers la version demandée.

2. Procédé selon la revendication 1, dans lequel au moins le premier bloc du flux de contenu d'entrée est transcodé par avance dans les blocs correspondants d'une multiplicité de versions à partir des différentes versions alternatives offertes au dispositif client.

3. Procédé selon la revendication 2, dans lequel le bloc correspondant à au moins le premier bloc diffusé en continu immédiatement en réponse à la demande est sélectionné à partir d'une version compatible avec la capacité de reproduction du client.

4. Procédé selon la revendication 2, dans lequel le bloc correspondant à au moins le premier bloc diffusé en continu immédiatement en réponse à la demande est sélectionné à partir d'une version dont les paramètres de transcodage sont les plus proches possible des paramètres de transcodage extraits de la demande reçue du dispositif client.

5. Procédé selon la revendication 1, dans lequel le transcodage inclut la production d'un flux de contenu de sortie dans lequel au moins un format, une résolution temporelle ou spatiale, un débit de données ou une qualité est différent(e) respectivement du format, de la résolution temporelle ou spatiale, du débit de données ou de la qualité d'entrée.

6. Procédé selon la revendication 1, dans lequel les paramètres de transcodage pour contrôler le transcodage d'un bloc subséquent du flux de contenu d'entrée sont modifiés en fonction des informations sur une capacité de la connexion entre un serveur offrant le flux de contenu d'entrée et le dispositif client.

7. Procédé selon la revendication 1, dans lequel pour chaque bloc subséquent, différentes versions alternatives du flux de contenu de sortie sont offertes pour sélection par le dispositif client et dans lequel au moins une variante du bloc mis à disposition est transcodée conformément à des paramètres extraits à partir d'une demande relative à un bloc en cours de transmission.

8. Appareil de diffusion en continu d'un flux de contenu de sortie transcodé adaptativement à partir d'un flux de contenu d'entrée correspondant, ledit appareil comprenant les éléments suivants :
- une unité de division permettant de diviser le flux de contenu d'entrée en deux ou plusieurs blocs ;
- une unité de transcodage permettant de transcoder et de stocker au moins un premier bloc du flux de contenu d'entrée sous forme d'au moins un bloc correspondant d'un flux de contenu de sortie correspondant à au moins une version des différentes versions alternatives offertes au dispositif client ;
- une unité de réception permettant de recevoir une demande, en provenance du dispositif client, de diffusion en continu d'un bloc d'une version sélectionnée, parmi les différentes versions alternatives, du flux de contenu de sortie, la version sélectionnée parmi les versions alternatives offertes au dispositif client n'étant pas disponible ;
- une unité de diffusion en continu permettant de commencer la diffusion en continu en utilisant un premier bloc parmi les blocs correspondants d'un flux de contenu de sortie correspondant à au moins une version parmi les différentes versions alternatives offertes au dispositif client qui avaient été transcodés ;
- une unité d'extraction permettant d'extraire les paramètres de transcodage à partir de la demande, pour contrôler le transcodage d'un bloc de flux de contenu d'entrée subséquent vers la version sélectionnée par le dispositif client ;
l'unité de diffusion en continu étant adaptée pour diffuser en continu le bloc suivant transcodé dans la version demandée.
